# EUROPEAN PATENT SPECIFICATION

(11) **EP 3 805 077 B1**
(45) Date of publication and mention of the grant of the patent: **09.08.2023**
(21) Application number: 18919903.7
(22) Date of filing: 24.05.2018
(51) Int. Cl.: B62D 25/02, B62D 29/00

(54) **AUTOMOBILE PART**
AUTOMOBILTEIL
PIÈCE AUTOMOBILE

(43) Date of publication of application: 14.04.2021
(73) Proprietor: NISSAN MOTOR CO., LTD., Yokohama-shi, Kanagawa 221-0023 (JP)
(72) Inventor: ODA, Takashi, Atsugi-shi, Kanagawa 243-0123 (JP); MOROHOSHI, Katsumi, Atsugi-shi, Kanagawa 243-0123 (JP); KOYAMA, Masaki, Atsugi-shi, Kanagawa 243-0123 (JP); JIANG, Zhe, Atsugi-shi, Kanagawa 243-0123 (JP)
(74) Representative: Grünecker Patent- und Rechtsanwälte PartG mbB
(86) International application number: PCT/JP2018/019998
(87) International publication number: WO 2019/224976

(56) References cited:
- WO-A1-03/097431
- WO-A1-2013/029695
- DE-A1-102007 038 087
- DE-A1-102010 037 459
- DE-U1- 20 013 208
- JP-A- 2003 502 205
- JP-A- 2005 271 477
- JP-A- 2010 168 040
- JP-A- 2016 148 447
- JP-A- 2017 013 430
- US-A1- 2015 197 289

## Description

### TECHNICAL FIELD

The present invention relates to an automobile part using a composite of thermoplastic resin and a metal plate, and further more specifically, relates to an automobile part in which the thermoplastic resin is directly adhered to the metal plate.

### BACKGROUND ART

With automobile parts, reduction in vehicle weight has been aimed for by using a composite of resin and metal members, and adhesives have been used often for the adhesion of the resin and the metal material.

Although many adhesives for adhering resin and metal material have been developed, since thermal shrinkage is different between the metal member and the resin, residual shear stress is generated on the adhesive sandwiched between the metal member and the resin; this causes the adhesive to break, and peeling will occur easily.

JP5523849B2 (Patent Document 1) discloses a frame side component of bodywork of a motor vehicle in which voids formed between an outer frame and an inner frame produced from a metal sheet is reinforced by reinforcement structures composed of molded-on plastic.

This further discloses that by providing perforations to the frame made from the metal sheet and passing plastic pegs through the perforations and extending them over the surfaces of the perforations, it is possible to achieve a secure and discontinuous interlock bond between the frame made from the metal sheet and the plastic. DE 200 13 208 U1 (Patent Document 2) discloses an automobile part according to the preamble of claim 1.

### CITATION LIST

### Patent Document

Patent Document 1: JP5523849B2
Patent Document 2: DE 200 13 208 U1

### SUMMARY OF INVENTION

### Technical Problem

However, in the frame side component disclosed in Patent Document 1, stress may easily concentrate on the discontinuous interlock bond, and peeling occurs since the area that the metal frame is adhered to the plastic is small.

The present invention has been made in view of such problem in the prior art, and an object thereof is to provide an automobile part in which peeling of the thermoplastic resin from the metal plate is prevented.

### Solution to Problem

As a result of diligent study to achieve the above object, the inventors of the present invention found that the above object can be achieved by providing a liner layer on a metal plate side of a reinforcing member, the liner layer coating the metal plate, and closely and directly adhering the entirety of one surface of the liner layer to the metal plate. The inventors thus completed the present invention.

Namely, an automobile part of the present invention is defined in claim 1. Preferred embodiments are set out in the dependent claims.

### Advantageous Effects of Invention

According to the present invention, a reinforcing member having a liner layer that coats the metal plate is provided, and one surface of the liner layer is closely and directly adhered to the metal plate in the entirety of the surface. Therefore, it is possible to provide an automobile part in which peeling of the reinforcing member from the metal plate is prevented.

### BRIEF DESCRIPTION OF DRAWINGS

Fig. 1 is a plan view of an automobile part viewed from a reinforcing member side thereof.
Fig. 2 is a cross-sectional view of a part shown by line A-A' in Fig. 1.
Fig. 3 is a cross-sectional view schematically enlarging an adhesion interface of the metal plate with the thermoplastic resin.
Fig. 4 is a cross-sectional view showing an adhesion state of the reinforcing member (thermoplastic resin) formed with a reinforcement structure portion alone, and the metal plate.
Fig. 5 is a cross-sectional view showing a state in which the liner layer is continuously provided from one surface to the other surface of the metal plate.
Fig. 6 is a cross-sectional view of a surface along the reinforcement structure portion shown by line B-B' in Fig. 1.
Fig. 7 is a cross-sectional view showing a state in which an exposed portion and the metal plate of the automobile part are welded to each other.
Fig. 8 is a cross-sectional view showing a state in which two automobile parts are welded to each other at the exposed portions.
Fig. 9 is an SEM image of an aluminum plate surface of Example 1.

### DESCRIPTION OF EMBODIMENTS

An automobile part of the present invention comprises a metal plate, and a reinforcing member including thermoplastic resin disposed on one surface of the metal plate.
The thermoplastic resin may contain a reinforcing fiber, such as carbon fiber and glass fiber. In particular, carbon fiber is preferably used since an automobile part with lightweight and high rigidity can be obtained.

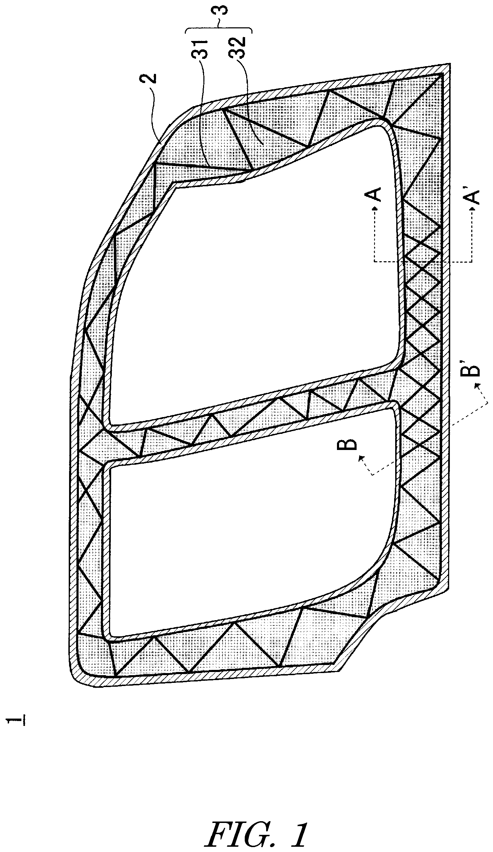

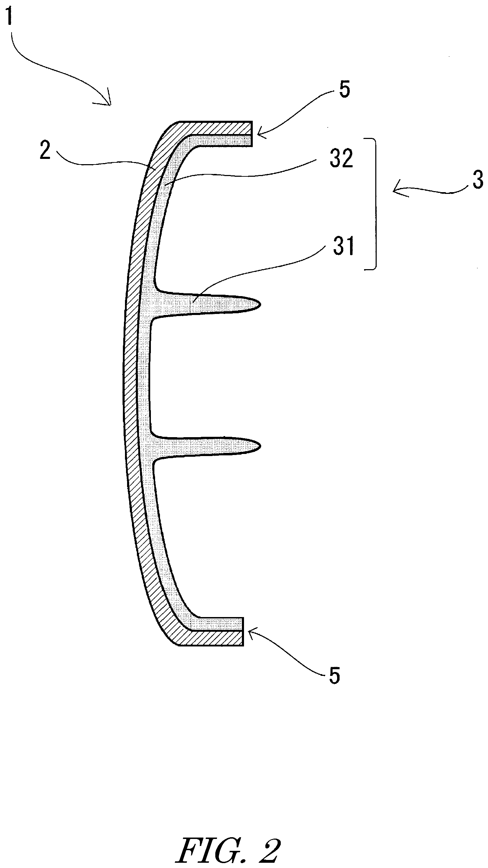

The automobile part of the present invention is described below based on an example of a case in which the thermoplastic resin is carbon fiber-reinforced thermoplastic resin (hereinafter may be referred to as CFRTP) containing carbon fiber. Fig. 1 shows a plan view of the automobile part of the present invention viewed from a reinforcing member (CFRTP) side thereof, and Fig. 2 shows a cross-sectional view of a part shown by line A-A' in Fig. 1.

The automobile part 1 has a reinforcing member 3 formed of a metal plate 2 and CFRTP, as shown in Fig. 1. The reinforcing member 3 has, not only a reinforcement structure portion 31, such as a rib or bead, but a continuous liner layer 32 that coats the metal plate 2, and the liner layer 32 covers an interval between the reinforcement structure portion 31 and the reinforcement structure portion 31 provided upright on the liner layer 32 without any gap.

That is to say, as shown in Fig. 1, a projected area of the liner layer 32, when viewing the reinforcing member 3 from its thickness direction, is a projected area of the entire reinforcing member 3, and as shown in Fig. 2, the reinforcement structure portions 31 are connected to each other and provided upright on the continuous substantially planar liner layer 32.

One surface of the liner layer 32 is closely adhered to the metal plate 2 in the entirety of the surface, and the metal plate 2 is directly adhered on the reinforcing member 3.

In the automobile part 1, the entirety of one surface of the liner layer 32 having a large projected area as described above serves as an adhesion surface; since an adhesion area of the reinforcing member 3 with the metal plate 2 is large, the reinforcing member 3 can be firmly adhered to the metal plate 2 without an adhesive or the like intervening therebetween, and peeling can be prevented.

Moreover, in the automobile part 1, the liner layer 32 is adhered to the metal plate 2, and where the liner layer 32 is adhered, the liner layer 32 supports the metal plate 2, thus allowing for achieving sufficient rigidity. Accordingly, it is possible to reduce the thickness of the metal plate 2.

More specifically, although depending on the required strength, it is possible to make the thickness of the metal plate 2 be 0.5 mm or more and 2.5 mm or less, thus allowing for a significant reduction in weight.

The automobile part 1 may be produced by injection pressing or press molding method.

The injection pressing is a method in which injection material is injected in a state in which a mold is slightly open, and then the mold is closed completely, the injected material is pressed, to spread the injection material throughout a cavity to effect molding.

In the injection pressing, since the cavity is filled with molten thermoplastic resin, the thermoplastic resin closely adheres to the metal plate 2 without any gap and thus firm adhesion can be effected. Hence, it is preferably used.

More specifically, a molded metal plate is disposed inside the mold and pressed by an upper mold, and in a state in which the mold is slightly open, injection material containing thermoplastic resin is injected towards the metal plate from a lower mold side. The mold is then closed completely, and the injection material is pressed together with the metal plate, to spread the injection material throughout the cavity, while the thermoplastic resin is closely adhered to the metal plate, to produce the automobile part.

The metal plate 2 is preferably roughened on at least one surface thereof.
By having the surface adhering to the reinforcing member 3 roughened, it is possible to adhere firmly furthermore.

Examples of the roughening process include mechanical roughening processes, such as sandblasting, liquid honing, buffing, and polishing using a polishing sheet, as well as acid treatment, chemical etching, Laseridge and the like.

Among these, unlike the mechanical roughening processes, chemical etching and Laserige can effect the roughening by forming pores having an internal diameter greater than an opening diameter. Therefore, by filling the thermoplastic resin inside the pores by injection pressing, an anchor effect is obtained, and the thermoplastic resin can be firmly adhered to the metal plate.

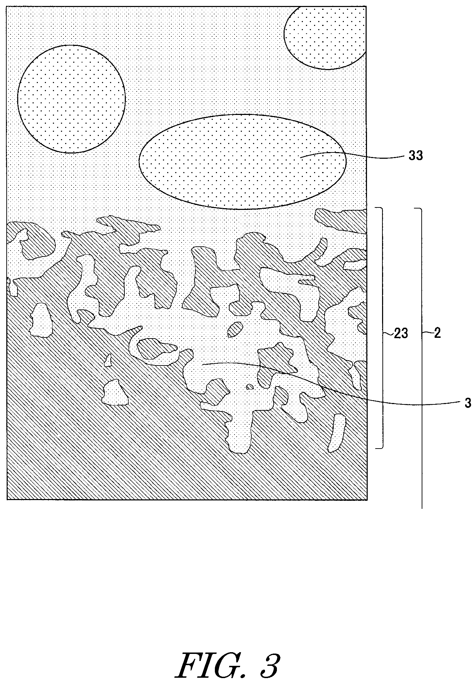

Furthermore, chemical etching can form a porous structure 23 of an ant's nest form, as shown in Fig. 3, having voids connected to each other by tunnels; this allows for achieving a large anchor effect, thus achieving a further firm adhesion.
Since the voids within the porous structure 23 are connected to each other by tunnels, even if one opening is blocked by carbon fibers 33 during the injection pressing, the thermoplastic resin 3 can be filled into all of the voids in the porous structure 23, because the thermoplastic resin 3 enter from the other openings, and it is not likely that defects in filling occur. Hence, the chemical etching is preferably used in particular.

The chemical etching may be performed by immersing the metal plate in an aqueous solution of ammonium, hydrazine, and/or water-soluble amine compound. More specifically, roughening having a minute unevenness is possible by immersing the metal plate in 3% to 10% hydrazine monohydrate aqueous solution that is warmed to 40 °C to 70 °C for several minutes and then rinsing with water.

As the metal plate, other than metal sheets, such as aluminum, steel, stainless steel, copper, titanium, magnesium, or brass, metal sheets coated with the above metals may be used, for example.

Surface roughness (Ra) of the roughened metal plate is preferably 5 µm or less, further preferably 1.2 µm or less.

By having the surface roughness (Ra) of the metal plate be 5 µm or less, it is possible to configure a design plane without the unevenness standing out even if the other surface is also roughened, and further by having the surface roughness be 1.2 µm or less, a smooth painting plane can be formed.

The thermoplastic resin preferably contains carbon fibers whose average fiber diameter is 7 µm or more and 15 µm or less, and whose average length is 0.1 mm or more and 1 mm or less.
By containing carbon fibers of the above range, molding by injection pressing is possible, and an automobile part with high rigidity can be obtained.

Moreover, the thermoplastic resin preferably contains the carbon fibers in an amount of 30 mass% or more and 40 mass% or less. By having the carbon fiber content which satisfies the above range, the rigidity of the automobile part can be improved.

Namely, if the carbon fiber content exceeds 40 mass%, kneaded material (injection material) of the thermoplastic resin and the carbon fibers cools down and increases in viscosity since the material contains many carbon fibers that has high heat conductivity; this makes the thermoplastic resin difficult to enter inside the porous structure, thus causing filling defects and easy peeling, and may cause a decrease in the rigidity of the automobile part.
Moreover, when the carbon fiber content is less than 30 mass%, reinforcement effect by the carbon fibers will be small, thus causing the rigidity of the automobile part to decrease.

The viscosity of the injection material when performing the injection pressing, although depending on the thermoplastic resin, injection pressure or the like, is preferably 30 Pa s or more and 200 Pa s or less, and preferably 30 Pa·s or more and 50 Pa·s or less. When the viscosity of the injection material is low, the thermoplastic resin easily enters the inside part of the porous structure, however at a temperature, at which the viscosity is less than 30 Pa·s, the thermoplastic resin thermally decomposes and the adhesive strength may easily decrease.

As the thermoplastic resin, a thermoplastic resin that can be molded by the injection pressing may be used. Examples thereof include, nylon 6, nylon 66, polyphenylene sulfide, polybutylene terephthalate, and polyphthalamide.

In the automobile part 1, when viewed from the thickness direction shown in Fig. 1, the projected area of the liner layer 32, that is the reinforcing member 3, is preferably 50% or more of the projected area of the metal plate 2.

In the automobile part 1 of the present invention, the metal plate 2 may be made thin and can cool easily, whereas the reinforcement structure portion 31 formed by CFRTP to which the metal plate 2 is adhered is thick and is difficult to cool; this thus causes a large difference in cooling speed.
Accordingly, shear force is generated due to the difference in heat contraction amount after the injection pressing, thus easily causing deformation of the metal plate 2 and peeling of the metal plate 2 from the reinforcing member 3.

By having the projected area of the liner layer 32 of 50% or more of the projected area of the metal plate 2, the cooling speed of the metal plate 2 slows down while thermal strain is dispersed, thus enabling the prevention of deformation of the metal plate 2 and the peeling of the metal plate 2 from the reinforcing member 3. Furthermore, with the liner layer 32 having an even thickness, the thermal strain is reduced.

Moreover, in the injection pressing, the injection material is injected in a state in which the mold is slightly open; this causes the injection material to leak and cause application of the thermoplastic resin on a region outside a desired region.

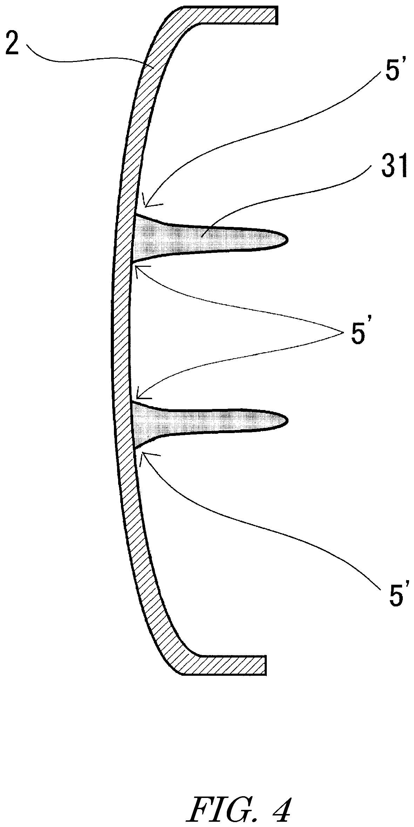

In the automobile part 1 of the present invention, the liner layer 32 is formed continuously, and a length of a border 5 between a location where the liner layer 32 is formed and a location where the liner layer 32 is not formed, shown in Fig. 2, is shorter than the length of the aforementioned border 5' of the reinforcing member 3 formed by the reinforcement structure portion 31 alone, shown in Fig. 4.

Therefore, in the automobile part 1 of the present invention, since the length of the border 5 is short and there is a small risk that the thermoplastic resin will leak, injection press molding is possible with a reduced amount of sealing structure of the mold for preventing the leakage of thermoplastic resin, thus enabling cost effective molding.

In the reinforcing member 3, when viewed from the thickness direction shown in Fig. 1, the projected area of the reinforcement structure portion 31 is preferably 30% or less with respect to the projected area of the liner layer 32.
By having the projected area of the reinforcement structure portion 31 of 30% or less, it is possible to prevent local deformation of the metal plate 2 that generates around the reinforcement structure portion 31 due to sink marks at ribs.

From the viewpoint of preventing local deformation of the metal plate 2, there is no lower limit in the projected area of the reinforcement structure portion 31 with respect to the projected area of the liner layer 32. However, since the rigidity of the automobile part 1 will improve with more of the reinforcement structure portions 31, it is preferably 5% or more, although depending on the required rigidity.

Moreover, the thickness of the liner layer 32 is preferably 1 mm or more and 3 mm or less. When the thickness is less than 1 mm, the cavity will become narrow and a filling distance will become long, thus causing difficulty in molding by the injection pressing, and when exceeding 3 mm, the effect of weight reduction will decrease.

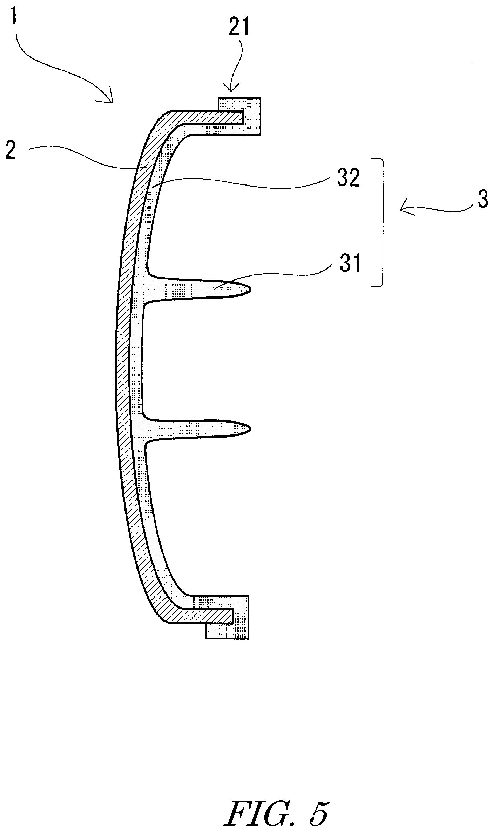

The automobile part 1 has, at an end portion of the other surface of the metal plate 2, a coated portion 21 coated by the liner layer 32 continuing from the one surface side. As shown in Fig. 5, by having the liner layer 32 provided continuously from one surface to the other surface of the metal plate 2, a physical engagement is formed, and thus falling off of CFRTP3 can be prevented.

By forming the coated portion 21, the thermoplastic resin will be exposed on the other surface side that serves as a design plane. However, when this is an automobile part, in which the exposed thermoplastic resin can be coated by door molding, such as a door frame of a body side panel, designability thereof will not decrease.

The metal plate 2 has a bent portion 24 at its end portion that is bent towards the liner layer 32 side. The bent portion 24 improves the strength of the metal plate 2 itself, and together with the reinforcing member 3, can improve the strength of the automobile part 1.

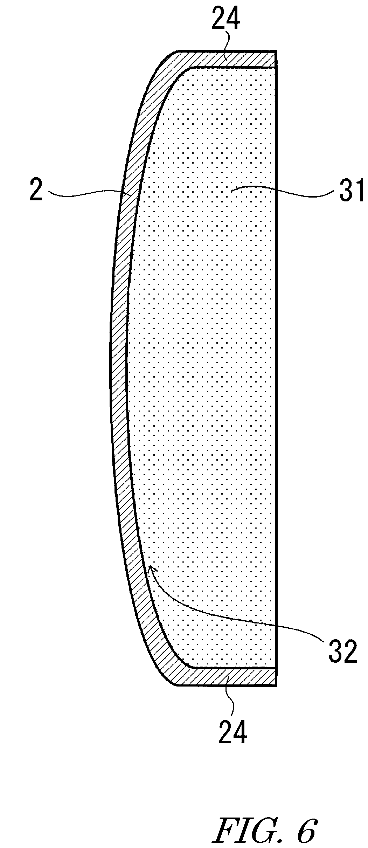

Furthermore, it is preferable that the metal plate 2 includes the bent portion 24 at both of its end portions, that the cross section of the surface along the reinforcement structure portions 31 shown by line B-B' in Fig. 1 is as shown in Fig. 6, and that the reinforcement structure portions 31 are provided upright continuously from the bent portion 24 at one end to the bent portion at the other end.

With such reinforcement structure portion 31 provided upright between the two bent portions, it is possible to further improve the strength of the automobile part 1 against stress from a direction intersecting with the bent portion 24, which makes the interval between the both end portions of the metal plate 2 narrow.

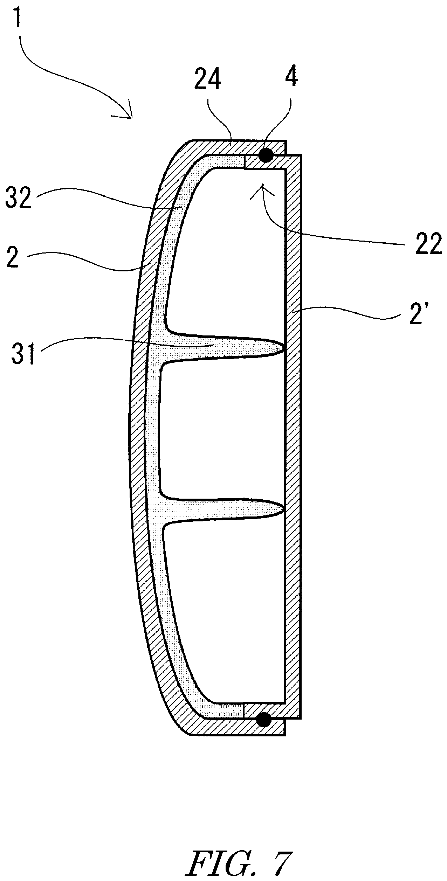

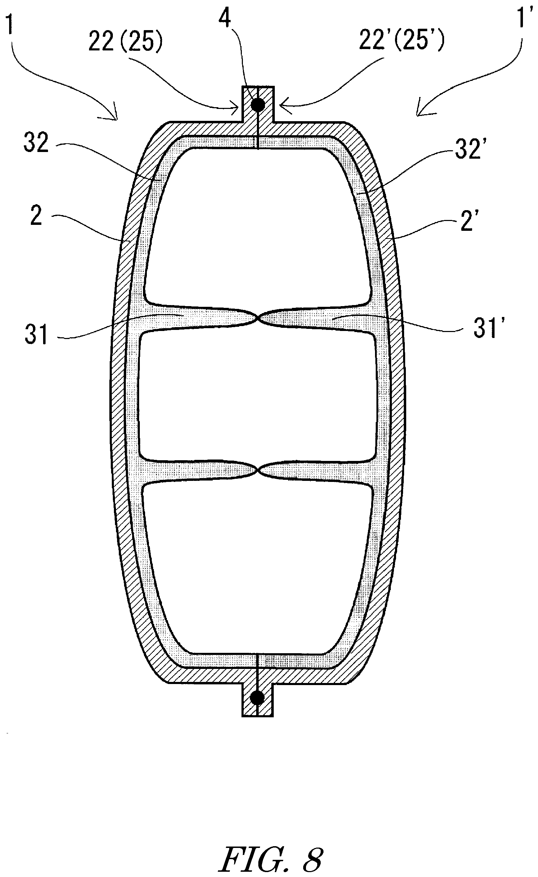

Moreover, the automobile part 1 has an exposed portion 22 at an end portion of one surface of the metal plate 2, which is exposed from the liner layer 32. By forming a flange and making it exposed from the liner layer 32, welding between metals become possible; as shown in Figs. 7 and 8, it is possible to bond on the reinforcement member 3 side a further other metal plate 2' or another automobile part 1', by welding.

The bent portion 24 includes a flange portion 25 at its end portion that is further bent towards a planar direction end portion side of the metal plate. By providing the metal plate 2 with a hat shape having the flange portion 25, it is possible to further improve the strength of the automobile part 1.

In addition, by making the flange portion 25 be the exposed portion 22 exposed from the liner layer 32, it is possible to bond another metal plate 2' or another automobile part 1' by welding, as shown in Fig. 8.

The length of the exposed portion 22, namely, the length from the edge portion of the metal plate 2 to the edge portion of the liner layer 32 is preferably 5 mm or more and 30 mm or less.

When the length of the exposed portion 22 is less than 5 mm, not only will the welding margin be short thus causing difficulty in welding, the thermoplastic resin will thermally decompose by the heat of the welding, thus generating a void inside the porous structure; this void will serve as a starting point for peeling, and cause a decrease in adhesive strength. Moreover, when outer force is applied, the stress will concentrate on a border between a part on which the liner layer 32 is adhered and the exposed portion 22, thus making the reinforcing member 3 to easily peel off.

Moreover, in the automobile part 1 of the present invention, since the liner layer 32 and the metal plate 2 together support the part as one, when the length of the exposed portion 22 exceeds 30 mm and a portion with the metal plate 2 alone increases, outer force will concentrate on that portion and would make the part break more easily.

The automobile part 1 is preferably of a sandwich structure that sandwiches the reinforcing member 3 with the metal plates 2, 2', as shown in Figs. 7 and 8.

The edge portion of the liner layer 32 and the reinforcement structure portion 31 of the reinforcing member 3 abuts the other metal plate 2' or the reinforcing member 3' provided on the other metal plate 2' to form a hollow structure; and the reinforcement structure portion 31 serve as a partition that divides the hollow structure. Therefore, the automobile part 1 can be increased in strength while being reduced in weight.

The automobile part 1 may be suitably used for a framework member, such as a body side panel, a rear fender and a dash panel, as well as for a door panel and a back door panel.

### EXAMPLES

Hereinafter, the present invention will be described in more detail with examples. However, the present invention is not limited to the following examples.

### [Example 1]

A press molded aluminum plate of a thickness of 1 mm is immersed in alkaline liquid to degrease, and then was immersed in acidic liquid to neutralize. After immersing the aluminum plate in 5% hydrazine monohydrate aqueous solution heated to 50 °C for five minutes, the aluminum plate was washed with water and dried to obtain a surface-roughened aluminum plate.

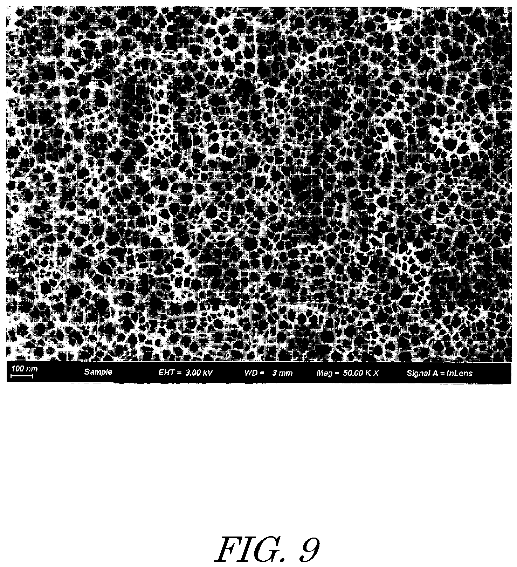

In this aluminum plate, a porous structure layer having an average aperture diameter of 10 nm was formed to a depth of 100 nm, and its surface roughness (Ra) was 0.3 µm.
An SEM image of the aluminum plate surface is shown in Fig. 9.

The aluminum plate was disposed in the mold, was pressed with the upper mold, and, kneading material of carbon fibers and nylon 6 that contains 35 mass% of carbon fibers having an average fiber diameter of 10 µm and an average length of 0.5 mm was injected in a state in which the mold was slightly open, while being heated to 280 °C. The mold was then closed completely and pressed at 10 MPa, to obtain an automobile part having a liner layer of a thickness of 2 mm.

The cross section of this automobile part was observed, and it was confirmed that the thermoplastic resin was filled in all voids in the porous structure formed in the aluminum plate as shown in Fig. 3, and that there were no filling defects.

### [Example 2]

An automobile part was obtained as with Example 1 except that the surface was roughened by sandblasting, and that an aluminum plate having a surface roughness (Ra) of 7 µm was used.

### [Example 3]

An automobile part was obtained as with Example 1 except that no roughening process was carried out to the aluminum plate.

### <Evaluations>

Adhesion strength of the aluminum plate with the carbon fiber-reinforced thermoplastic resin was measured for the automobile parts of Examples 1 to 3 described above. The measurement results are shown in Table 1.

The adhesion strength was measured by cutting out the automobile part so that an adhesion area is 0.5 cm², actually measuring this with a tension testing machine, then converting this to an area strength of 1.0 cm².

**[Table 1]**

| | Example 1 | Example 2 | Example 3 |
|---|---|---|---|
| Bonding strength (MPa) | 42 | 5 | 2 |

From Table 1, it can be seen that the automobile part of the present invention has strong adhesion strength between the metal plate and the reinforcing member containing the thermoplastic resin, and that peeling can be prevented.
In particular, Example 1, in which a metal plate roughened by forming pores having an internal diameter greater than the opening diameter was used, has an adhesion strength 8.4 times stronger than Example 2, which was roughened by a mechanical process. Therefore, it was confirmed that by roughening by chemical etching, the adhesion strength becomes dramatically high, and by reinforcing with the reinforcing member, an automobile part of high rigidity can be obtained.

### REFERENCE SIGNS

- 1: Automobile part
- 2: Metal plate
- 21: Coated portion
- 22: Exposed portion
- 23: Porous Structure
- 24: Bent portion
- 25: Flange portion
- 3: Reinforcing member (Carbon fiber-reinforced thermoplastic resin)
- 31: Reinforcement structure portion
- 32: Liner layer
- 33: Carbon fiber
- 4: Welded portion
- 5: Border

## Claims

1. An automobile part (1), comprising:
a metal plate (2); and
a reinforcing member (3) including a thermoplastic resin disposed on one surface of the metal plate (2),
wherein the reinforcing member (3) has a liner layer (32) which coats the metal plate (2) and a reinforcement structure portion (31) which is provided upright on the liner layer (32) and which reinforces the metal plate (2),
the metal plate (2) has, at its end portion, a bent portion (24) that is bent towards the liner layer (32) side,
the bent portion (24) comprises at its end portion a flange portion (25) that is bent,
an entirety of one surface of the liner layer (32) is directly adhered to the metal plate (2),
the flange portion (25) is an exposed portion (22), which is exposed from the liner layer (32) at an end portion of one surface of the metal plate (2), and is bent towards a planar direction end portion side of the metal plate (2), and
the bent portion (24) has a coated portion (21) coated by the liner layer (32) continuing from the one surface side to another surface of the metal plate (2),
**characterized in that**
the coated portion (21) coated by the liner layer (32) continues from the one surface side to the other surface at an end portion of the other surface of the metal plate (2).

2. The automobile part (1) according to claim 1, wherein the flange portion (25) is bent towards a planar direction end portion side of the metal plate (2).

3. The automobile part (1) according to claim 1 or 2, wherein at least one surface of the metal plate (2) is roughened.

4. The automobile part (1) according to claim 3, wherein at least one surface of the metal plate (2) has a pore whose internal diameter is greater than an opening diameter.

5. The automobile part (1) according to claim 4, comprising pores having an internal diameter greater than an opening diameter, and voids formed by the pores are connected to each other in an inside part.

6. The automobile part (1) according to any one of claims 1 to 5, wherein the reinforcing member (3) contains a carbon fiber.

7. The automobile part (1) according to claim 6, wherein the reinforcing member (3) contains the carbon fiber in an amount of 30 mass% or more and 40 mass% or less.

8. The automobile part (1) according to any one of claims 1 to 7, wherein the exposed portion (22) has a length of 5 mm or more and 30 mm or less.

9. The automobile part (1) according to any one of claims 1 to 8, wherein a projected area of the liner layer (32) is 50% or more with respect to a projected area of the metal plate (2).

10. The automobile part (1) according to any one of claims 1 to 9, wherein a projected area of the reinforcement structure portion (31) is 30% or less with respect to a projected area of the liner layer (32).

11. The automobile part (1) according to any one of claims 1 to 10, wherein the liner layer (32) has a thickness of 1 mm or more and 3 mm or less.

12. The automobile part (1) according to any one of claims 1 to 11, wherein the metal plate (2) has the bent portion (24) at both of its end portions, and
the reinforcement structure portion (31) is provided upright continuously from the bent portion (24) at one end to the bent portion (24) at another end.

13. The automobile part (1) according to any one of claims 1 to 12, further comprising another metal plate (2') on a side of one surface of the metal plate (2), sandwiching the reinforcing member (3).

14. The automobile part (1) according to any one of claims 1 to 13, wherein the metal plate (2) has a thickness of 0.5 mm or more and 2.5 mm or less.

15. The automobile part (1) according to any one of claims 1 to 14, wherein the metal plate (2) has a door frame.

16. The automobile part (1) according to any one of claims 1 to 15, which is a body side panel.

## Patentansprüche

1. Ein Automobilteil (1), umfassend:
eine Metallplatte (2); und
ein Verstärkungselement (3), das ein thermoplastisches Harz enthält und auf einer Oberfläche der Metallplatte (2) angeordnet ist, wobei
das Verstärkungselement (3) eine Auskleidungsschicht (32), die die Metallplatte (2) beschichtet, und einen Verstärkungsstrukturabschnitt (31) aufweist, der aufrecht auf der Auskleidungsschicht (32) angeordnet ist und der die Metallplatte (2) verstärkt,
die Metallplatte (2) an ihrem Endabschnitt einen gebogenen Abschnitt (24) aufweist, der zur Seite der Auskleidungsschicht (32) hin gebogen ist,
der gebogene Abschnitt (24) an seinem Endabschnitt einen Flanschabschnitt (25) aufweist, der gebogen ist,
die gesamte eine Oberfläche der Auskleidungsschicht (32) direkt an die Metallplatte (2) geklebt ist,
der Flanschabschnitt (25) ein freiliegender Abschnitt (22) ist, der von der Auskleidungsschicht (32) an einem Endabschnitt einer Oberfläche der Metallplatte (2) freiliegt und zu einer in ebener Richtung liegenden Endabschnittsseite der Metallplatte (2) gebogen ist, und
der gebogene Abschnitt (24) einen beschichteten Abschnitt (21) aufweist, der von der Auskleidungsschicht (32) beschichtet ist, die sich von der einen Oberflächenseite zu einer anderen Oberfläche der Metallplatte (2) fortsetzt,
**gekennzeichnet dadurch dass**
der mit der Auskleidungsschicht (32) beschichtete Abschnitt (21) sich von der einen Oberflächenseite zur anderen Oberfläche an einem Endabschnitt der anderen Oberfläche der Metallplatte (2) fortsetzt.

2. Das Automobilteil (1) gemäß Anspruch 1, wobei der Flanschabschnitt (25) zu einer in ebener Richtung liegenden Endabschnittsseite der Metallplatte (2) gebogen ist.

3. Das Automobilteil (1) gemäß Anspruch 1 oder 2, wobei mindestens eine Oberfläche der Metallplatte (2) aufgeraut ist.

4. Das Automobilteil (1) gemäß Anspruch 3, wobei mindestens eine Oberfläche der Metallplatte (2) eine Pore aufweist, deren Innendurchmesser größer als ein Öffnungsdurchmesser ist.

5. Das Automobilteil (1) gemäß Anspruch 4, umfassend Poren mit einem Innendurchmesser, der größer ist als ein Öffnungsdurchmesser, und durch die Poren gebildete Hohlräume, die in einem Innenteil miteinander verbunden sind.

6. Das Automobilteil (1) gemäß einem der Ansprüche 1 bis 5, wobei das Verstärkungselement (3) eine Kohlenstofffaser enthält.

7. Das Automobilteil (1) gemäß Anspruch 6, wobei das Verstärkungselement (3) die Kohlenstofffaser in einer Menge von 30 Massenprozent oder mehr und 40 Massenprozent oder weniger enthält.

8. Das Automobilteil (1) gemäß einem der Ansprüche 1 bis 7, wobei der freiliegende Abschnitt (22) eine Länge von 5 mm oder mehr und 30 mm oder weniger aufweist.

9. Das Automobilteil (1) gemäß einem der Ansprüche 1 bis 8, wobei eine vorstehende Fläche der Auskleidungsschicht (32) 50% oder mehr in Bezug auf eine vorstehende Fläche der Metallplatte (2) beträgt.

10. Das Automobilteil (1) gemäß einem der Ansprüche 1 bis 9, wobei eine vorstehende Fläche des Verstärkungsstrukturabschnitts (31) 30% oder weniger in Bezug auf eine vorstehende Fläche der Auskleidungsschicht (32) beträgt.

11. Das Automobilteil (1) gemäß einem der Ansprüche 1 bis 10, wobei die Auskleidungsschicht (32) eine Dicke von 1 mm oder mehr und 3 mm oder weniger aufweist.

12. Das Automobilteil (1) gemäß einem der Ansprüche 1 bis 11, wobei die Metallplatte (2) an ihren beiden Endabschnitten den gebogenen Abschnitt (24) aufweist, und
der Verstärkungsstrukturabschnitt (31) durchgehend aufrecht von dem gebogenen Abschnitt (24) an einem Ende zu dem gebogenen Abschnitt (24) an einem anderen Ende angeordnet ist.

13. Das Automobilteil (1) gemäß einem der Ansprüche 1 bis 12, des Weiteren umfassend eine weitere Metallplatte (2') auf einer Seite einer Oberfläche der Metallplatte (2), die das Verstärkungselement (3) sandwichartig einschließt.

14. Das Automobilteil (1) gemäß einem der Ansprüche 1 bis 13, wobei die Metallplatte (2) eine Dicke von 0,5 mm oder mehr und 2,5 mm oder weniger aufweist.

15. Das Automobilteil (1) gemäß einem der Ansprüche 1 bis 14, wobei die Metallplatte (2) einen Türrahmen aufweist.

16. Das Automobilteil (1) gemäß einem der Ansprüche 1 bis 15, das ein Karosserieseitenpanel ist.

## Revendications

1. Pièce automobile (1), comprenant :
une plaque métallique (2) ; et
un élément de renfort (3) comprenant une résine thermoplastique disposée sur une surface de la plaque métallique (2),
dans laquelle l'élément de renfort (3) comporte une couche de protection (32) qui recouvre la plaque métallique (2) et une portion de structure de renfort (31) qui est pourvue verticalement sur la couche de protection (32) et qui renforce la plaque métallique (2),
la plaque métallique (2) présente, à sa portion d'extrémité, une portion pliée (24) qui est pliée du côté de la couche de protection (32),
la portion pliée (24) comporte à sa portion d'extrémité une portion de bride (25) qui est pliée,
la totalité d'une surface de la couche de protection (32) est directement collée à la plaque métallique (2),
la portion de bride (25) est une portion exposée (22), qui est exposée hors de la couche de protection (32) à une portion d'extrémité d'une surface de la plaque métallique (2), et qui est pliée vers un côté de la portion d'extrémité dans une direction plane de la plaque métallique (2), et
la portion pliée (24) comporte une portion revêtue (21) qui est revêtue par la couche de protection (32) continuant dudit un côté de la surface jusqu'à une autre surface de la plaque métallique (2),
**caractérisée en ce que**
la portion revêtue (21) revêtue par la couche de protection (32) continue depuis ledit un côté de la surface jusqu'à ladite autre surface à une portion d'extrémité de ladite autre surface de la plaque métallique (2).

2. Pièce automobile (1) selon la revendication 1, dans laquelle la portion de bride (25) est pliée vers un côté de portion d'extrémité dans une direction plane de la plaque métallique (2).

3. Pièce automobile (1) selon la revendication 1 ou 2, dans laquelle au moins une surface de la plaque métallique (2) est rendue rugueuse.

4. Pièce automobile (1) selon la revendication 3, dans laquelle au moins une surface de la plaque métallique (2) comporte un pore dont le diamètre interne est supérieur au diamètre d'ouverture.

5. Pièce automobile (1) selon la revendication 4, comprenant des pores dont le diamètre interne est supérieur au diamètre d'ouverture, et dans laquelle les vides formés par les pores sont connectés entre eux dans une partie interne.

6. Pièce automobile (1) selon l'une quelconque des revendications 1 à 5, dans laquelle l'élément de renfort (3) contient de la fibre de carbone.

7. Pièce automobile (1) selon la revendication 6, dans laquelle l'élément de renfort (3) contient une quantité de fibre de carbone supérieure ou égale à 30 % en masse et inférieure ou égale à 40 % en masse.

8. Pièce automobile (1) selon l'une quelconque des revendications 1 à 7, dans laquelle la portion exposée (22) présente une longueur supérieure ou égale à 5 mm et inférieure ou égale à 30 mm.

9. Pièce automobile (1) selon l'une quelconque des revendications 1 à 8, dans laquelle la surface projetée de la couche de protection (32) est supérieure ou égale à 50 % de la surface projetée de la plaque métallique (2).

10. Pièce automobile (1) selon l'une quelconque des revendications 1 à 9, dans laquelle la surface projetée de la portion de structure de renfort (31) est inférieure ou égale à 30 % de la surface projetée de la couche de protection (32).

11. Pièce automobile (1) selon l'une quelconque des revendications 1 à 10, dans laquelle la couche de protection (32) présente une épaisseur supérieure ou égale à 1 mm et inférieure ou égale à 3 mm.

12. Pièce automobile (1) selon l'une quelconque des revendications 1 à 11, dans laquelle la plaque métallique (2) comporte la portion pliée (24) à ses deux portions d'extrémité, et
la portion de structure de renfort (31) est pourvue verticalement en continu depuis la partie pliée (24) à une extrémité jusqu'à la portion pliée (24) à une autre extrémité.

13. Pièce automobile (1) selon l'une quelconque des revendications 1 à 12, comprenant en outre une autre plaque métallique (2') sur un côté d'une surface de la plaque métallique (2), prenant en sandwich l'élément de renfort (3) .

14. Pièce automobile (1) selon l'une quelconque des revendications 1 à 13, dans laquelle la plaque métallique (2) présente une épaisseur supérieure ou égale à 0,5 mm et inférieure ou égale à 2,5 mm.

15. Pièce automobile (1) selon l'une quelconque des revendications 1 à 14, dans laquelle la plaque métallique (2) comporte un cadre de porte.

16. Pièce automobile (1) selon l'une quelconque des revendications 1 à 15, qui est un panneau latéral de carrosserie.
